# EUROPEAN PATENT APPLICATION

(11) **EP 1 677 184 A1**
(43) Date of publication of application: **05.07.2006**
(21) Application number: 04770858.1
(22) Date of filing: 21.07.2004
(51) Int. Cl.: G06F 3/14, G09G 5/00, G09F 19/00, G09F 21/04, G06F 13/00

(54) **CONTENT PRESENTATION DEVICE, MANAGEMENT SERVER, CONTENT PRESENTATION SYSTEM, AND CONTENT PRESENTATION METHOD**

(30) Priority: 22.07.2003 JP 2003277904
(71) Applicant: Softbank Corp., Nihonbashi, Tokyo 103-8501 (JP)
(72) Inventor: SON, Masayoshi, / (JP)
(74) Representative: Grünecker, Kinkeldey, Stockmair & Schwanhäusser Anwaltssozietät
(86) International application number: PCT/JP2004/010348
(87) International publication number: WO 2005/008471

(57) **Abstract**

There are provided a memory 4d for accumulating content data and storing a presentation device identifier unique to each presentation device; a display 4a for outputting the content data; a communication interface 4c for receiving a switching control signal instructing switching of the content data output by the display 4a; a database 2 for accumulating management information for associating a presentation device identifier, a content identifier identifying the content to be output by each content presentation device, and presentation time information on the time presenting each content; a timer unit 12 for periodically measuring the elapse time; and a CPU 4b for switching the content data output from the display 4a on the basis of the management information and the measurement time of the timer unit 12. Thus, it is possible to provide information following, on a real time base, the change of population distribution changing depending upon the respective areas.

## Description

### [Field of the Invention]

The present invention relates to a content presentation device, a management server, a content presentation system, and a content presentation method in which content data including image, sound and text information and so forth are managed by the management server and presented by the content presentation device.

### [Background Art]

Conventionally, paper medium are generally used for advertisements on the street, on the platform and in the train. These paper medium advertisements are periodically changed in order to update the information as presented. So far, generally speaking, the replacement of advertisements is for example manually performed by workers after train service is halted or in the late-evening time period in which there is less traffic, from day to day or week by week.

However, the replacement of advertisements manually performed by workers has its limits in the update frequency, and thereby there is a problem that the change of information cannot timely be reflected on a real time base. Particularly, the information is updated very quickly in recent years, the replacement on a daily or weekly basis cannot provide sufficient information. In order to solve the above problem, there is a technique as described in Japanese Patent Published Application No. Hei 2003-69512.

This technique is an information providing system for a display type notification device. The information providing system comprises display type notification devices such as a signboard and an indicator, a transmitter unit incorporated in each display type notification or located in the vicinity thereof for transmitting information which is desired by the display owner to be notified about service content and the like provided by the display owner, and a mobile terminal for receiving the information transmitted from the transmitter unit. In accordance with this technique, information can be updated on a real time base by delivering information through communication lines.

However, in the case of the technique disclosed in the above patent publication 1, since information is displayed as an advertisement in the train only in accordance with the notification of a particular advertisement owner, the everchanging distribution of population cannot timely be reflected thereon. Particularly, in the middle of the city, the distribution of population and the distribution of age ranges are timely changing, and there is a problem that necessary information cannot be delivered to the respective necessary age ranges so that sufficient advertising effects cannot be expected.

### [Disclosure of the Invention]

The present invention has been made in order to solve the problems as described above, and it is an object to provide a content presentation device, a management server, a content presentation system, and a content presentation method capable of providing information reflecting the population distribution which is changing in the respective areas on a real time base.

In order to accomplish the object as described above according to the present invention, in the case where content data containing image, sound, text or other information are presented on content presentation devices, the corresponding content is presented on a presentation device, which is specified by the content presentation device identifier on the basis of the management information and the elapsed time as measured, by accumulating management information which associates content presentation device identifiers uniquely given to the content presentation devices, content identifiers which identify content to be output respectively by the content presentation devices, and presentation time information relating to the times in which the respective items of the content are presented,

More specifically speaking, a content presentation device comprises: a content accumulating unit that accumulates the content data; an identifier storing unit that stores a content presentation device identifier which is uniquely given to the content presentation devices; an output unit that outputs the content data; a communication unit that receives a switching control signal which instructs to switch the content data output from the output unit; a management information database that accumulates management information by which the presentation device identifiers, content identifiers which identify content to be output respectively by the content presentation devices, and presentation time information relating to the times in which the respective items of the content are presented; a timer unit that periodically measures an elapsed time; and an output switching unit that switches the content data output from the output unit on the basis of the management information and the measurement time of the timer.

In accordance with the present invention as described above, the content data to be presented by the content presentation devices installed in a train, a station yard, roadside locations and so forth can be centrally managed in accordance with the management information. In addition, the respective content presentation devices are given unique content presentation device identifiers, and the content data can be controlled for the respective content presentation devices with reference to the content presentation device identifiers in order to present content in accordance with the respective areas and hours.

Incidentally, the above content presentation system can be composed of the content presentation device and the management server as described below.

That is, the content presentation device is provided with a content accumulating unit that accumulates the content data; an identifier storing unit that stores a content presentation device identifier which is uniquely given to the content presentation devices; an output unit that outputs the content data; a communication unit that receives a switching control signal which instructs to switch the content data output from the output unit; and an output switching unit that switches the content data output from the output unit on the basis of the switching control signal.

In the above content presentation device, the communication unit preferably has a capability of receiving the content data, and the content accumulating unit preferably has a capability of accumulating the content data as received by the communication unit.

In the above content presentation device, it is preferred to provide a notification unit that notifies the content presentation device identifier stored in the identifier storing unit.

In the above content presentation device, the communication unit is preferably provided with a network formation capability of forming a local communication network with a base station or other content presentation devices located in a predetermined area, and the delivery of the content data or the reception of the switching control signal is preferably performed through the communication network.

In the above content presentation device, it is preferred to provide a capability of detecting another communication terminal apparatus located in the communication network, and notifying the presentation device identifier of its own device to the another communication terminal apparatus.

In the above content presentation device, the communication unit is preferably provided with a capability of acquiring through the communication network a terminal identifier which is used to specify another communication terminal apparatus located in the communication network.

Alternatively, the management server is provided with a management information database that accumulates management information by which presentation device identifiers which identify the content presentation devices, content identifiers which identify content to be output respectively by the content presentation devices, and presentation time information relating to the times in which the respective items of the content are presented; a timer unit that periodically measures an elapsed time; a communication unit that transmits a switching control signal designating the content, which is to be output, to a content presentation device determined on the basis of the management information and the measurement time of the timer;

In the above management server, it is preferred that the management information contains switching way information as to whether content data to be replaced is replaced by content data delivered anew or by content already stored in the content presentation device, and the switching control signal includes the content identifier of the content data for replacement in accordance with the switching way information.

In the above management server, it is preferred that the management information contains local information relating to the population distribution which is changing with time, and the switching control signal is generated and transmitted in accordance with the local information.

In the above management server, it is preferred to provide an external information acquisition unit that acquires information from external information service providers such as live traffic information and/or weather information, wherein the management information contains external information to be associated and a switching condition applicable to the external information, and the switching control signal is generated and transmitted in accordance with the external information when the switching condition is satisfied.

In the above management server, it is preferred that the content data is delivered to the corresponding content presentation device on the basis of the management information.

In the above management server, the management information preferably contains content delivery information which associates the content identifier of the content to be delivered, the presentation device identifier of the destination of delivery, and the delivery times with each other.

### [Brief Description of the Drawings]

[Fig. 1] Fig. 1 is a schematic representation of the entire configuration of a content presentation system in accordance with an embodiment.
[Fig. 2] Fig. 2 is a block diagram which shows the internal structure of a content presentation device in accordance with the embodiment.
[Fig. 3] Fig. 3 is a block diagram which shows the internal structure of a management server in accordance with the embodiment.
[Fig. 4] Fig. 4 is a flow chart which shows the operation of the content presentation system in accordance with the embodiment.
[Fig. 5] Fig. 5 is a flow chart which shows the process of generating content updating management information in accordance with the embodiment.

### [Best Mode for Carrying Out the Invention]

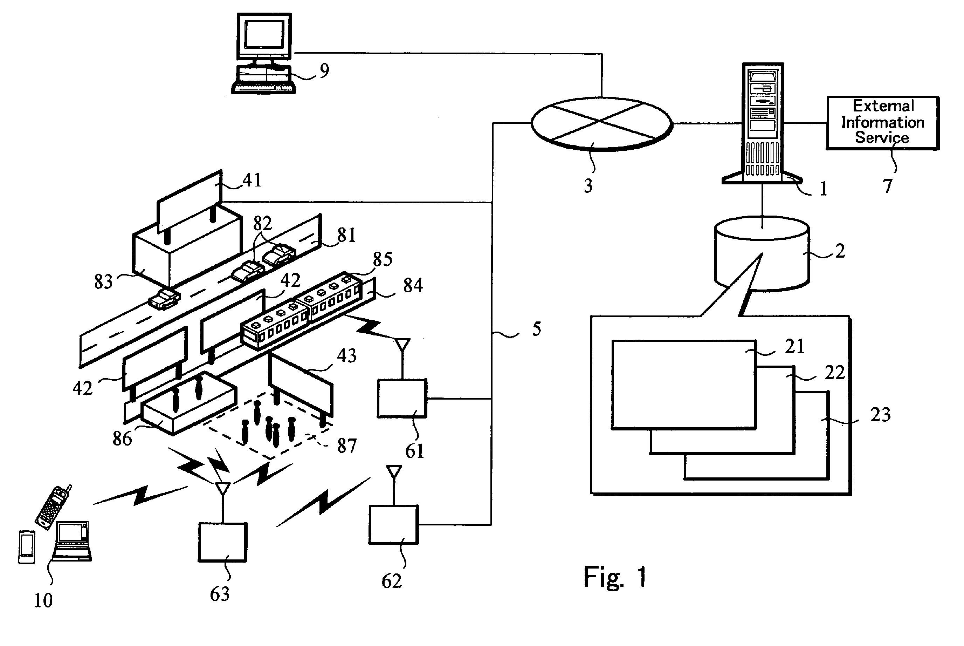

In what follows, an embodiment of the content presentation system in accordance with the present invention will be explained in detail. Fig. 1 is a schematic representation of the entire configuration of the content presentation system in accordance with the present invention.

As shown in the figure, the content presentation system in accordance with the present invention includes a management server 1 for outputting instructions to deliver and replace content, a database 2 for accumulating a variety of data items 21 to 23, content presentation devices 41 to 43 which perform the presentation of content and the replacement of the content, the Internet 3 to which the respective devices are connected, a broadband line 5 connected to the Internet 3, wireless base stations 61 to 63 which are connected to the management server 1 through the broadband line 5 and serve to relay data to the content presentation devices 41 to 43 and communication terminals 10 (cellular phones, PHSs, mobile terminals), and a personal computer 9 connectable to the Internet 3.

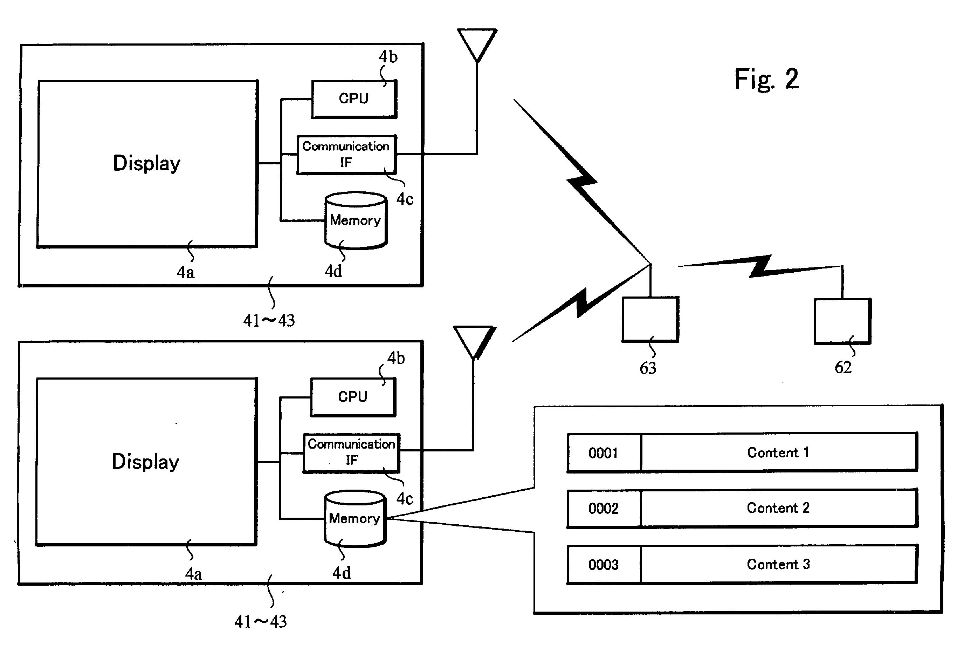

The content presentation devices 41 to 43 are devices in the form of signboards which are installed on a building 83 alongside a load 81, in locations close to a railroad 84, on a platform 86 in a station yard, in a location of an urban area 87, in a train 85, on the exterior surfaces of vehicles 82 and so forth. More specifically speaking, as shown in Fig. 2, each of these content presentation devices 41 to 43 comprises a memory 4d for storing content data and the IP of the content presentation device, a communication interface 4c for performing transmission and reception of data with the management server 1 through a communication line such as a wireless LAN or a broadband line, a display 4a for displaying content, and a CPU 4b for controlling the output operation and switching operation of the content.

The communication interface 4c is provided with the capability of receiving content data and a switching control signal delivered from the management server 1 through a wireless LAN, a wired LAN, the broadband line 5, a wireless communication line via the wireless base stations 61 to 63 and so forth, the capability of notifying the content presentation device IP to the other communication terminal apparatuses 10, and the network formation capability of forming a local communication network (wireless LAN) with the wireless base station 63 or the other content presentation devices located in a predetermined area.

In addition, the communication interface 4c is provided with the capability of detecting the other communication terminal apparatuses 10 located in the wireless LAN, and notifying the content presentation device IP of its own device to the other communication terminal apparatuses. By this configuration, the communication terminal apparatus 10 can obtain the content presentation device IPs of the nearby content presentation devices, and start communication with the content presentation devices by the use of this content presentation device IP. As a result, it is possible to perform operations linked to the information presented by the content presentation devices, for example, a request for more detailed data, a reservation of a shop or service, purchase of a commodity, and so forth.

When the switching control signal is received from the management server 1 through the wireless base stations 61 to 63, the CPU 4b analyzes the switching control signal, determines whether the presented data is switched to the content data which is accumulated in the memory 4d in advance or the content data which is streaming delivered from the management server 1. In the case where the presented data is switched to the content data which is accumulated in the memory 4d, the content IDs (index data: "0001" ~ "0003" in the figure) are extracted from the switching control signal, and the data is switched to the corresponding content data, and output.

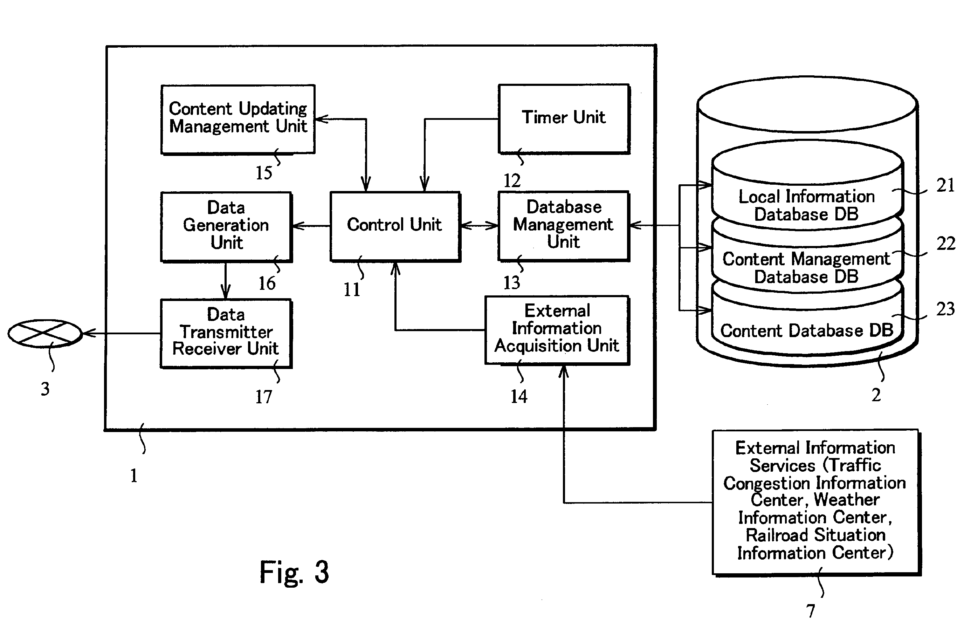

The management server 1 is a server unit serving to manage the content presentation devices 41 to 43 and, as illustrated in Fig. 3, provided with a database management unit 13 for managing the database 2 in which various types of data are accumulated, a timer unit 12 for periodically measuring the elapsed time, a data generation unit 16 for generating data to be transmitted to the content presentation devices, a data transmitter receiver unit 17 for data transmission and reception with the content presentation devices 41 to 43, a content updating management unit 15 for managing the updating and switching of content, an external information acquisition unit 14 for acquiring live traffic conditions, weather information and so forth from external information services 7, and a control unit 11 for controlling the operations of the respective units 12 to 17.

The database 2 accumulates data in a local information database 21, a content management database 22 and a content data base 23. The local information database 21 is a database in which are accumulated, for example, the time tables of transportation facilities such as railway and bus services, the statistical data showing the change in population distribution, the statistical data showing traffic congestion, or other data showing the change in population distribution pertinent to the respective areas.

The content management database 22 contains a content switching table as shown in a table 1, and a content updating table as shown in a table 2. As shown in the table 1, a group ID for managing a plurality of content presentation devices as a group, the IP addresses of the respective content presentation devices, content IDs for identifying the content to be presented by the respective content presentation devices, presentation times (times of day) of the respective content IDs, the way of switching content data, associated local information, associated external information, the conditions under which data is switched are written in the content switching table in association with each other.

**[table 1]**

| Group ID | Presentation Device IP | Content ID | Presentation Time | Switching WAY | Associated Local Information | Associated External Information | Switching Condition |
|---|---|---|---|---|---|---|---|
| CityA-1 | | CM-001 | All | Index | Railroad Time Table | | 3 Min. Before Arrival |
| | A-1-001 | News-001 | AM08: 45-AM09: 00 | Stream | | | |
| | | CM-002 | Every Half hour | index | | | |
| | | CM-003 | All | Index | | Live Traffic conditions | In Traffic Jan |
| | A-1-002 | News-001 | AM08:45-AM09:00 | Stream | | Weather Forecast | In Rain |
| | | CM-004 | Every Half hour | index | | | |

In addition, as shown in the table 2, the content presentation device IPs, the content IDs, and the times at which the content is delivered anew are contained in the the content updating table in association with each other.

**[table 2 ]**

| Group ID | Presentation Device IP | Content ID | Newly Delivery Time |
|---|---|---|---|
| CityA -1 | A-1-001 | CM-001 | Every Sun AM04:00 |
| | | News-001 | |
| | | CM-002 | Every Sun AM04:00 |
| | A-1-002 | CM-003 | Every Sun AM04:00 |
| | | News-001 | |
| | | CM-004 | Every Sun AM04:00 |

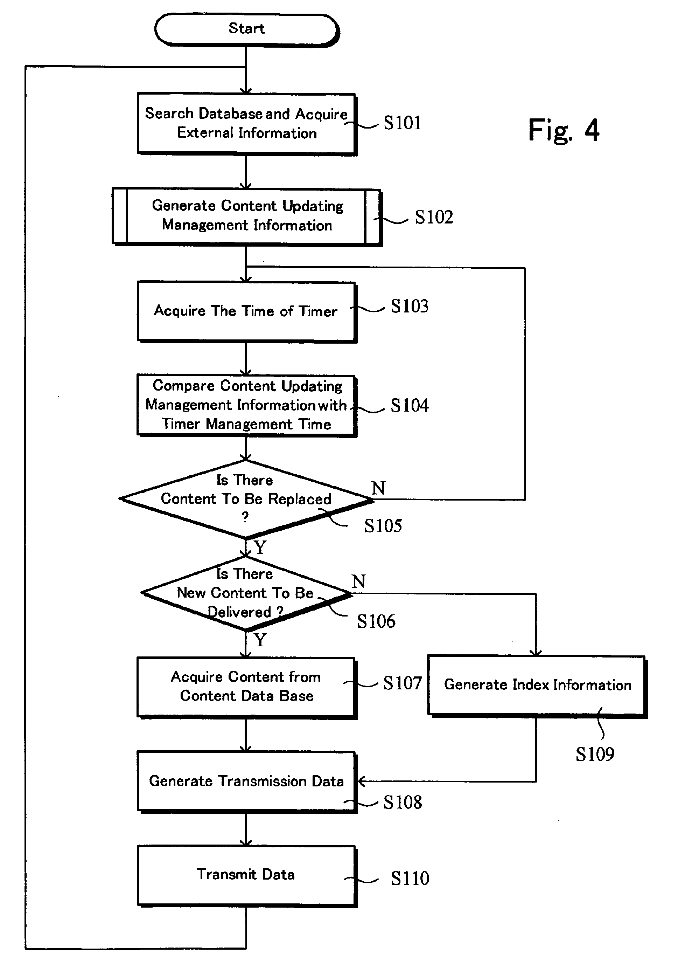

The operation of the content presentation system in accordance with the present embodiment having the structure as described above is as follows. Fig. 4 is a flow chart which shows the operation of the content presentation system. In this case, it is assumed that the measurement in a predetermined cycle is started by the timer unit 12.

As shown in the same figure, at first, the database 2 is searched, and external information is acquired from the external information services 7 in step S101. Specifically, the database management unit 13 searches the content management database in the database 2, reads the content switching table, and also reads the time tables, the statistical data of population distribution and the like which are local information.

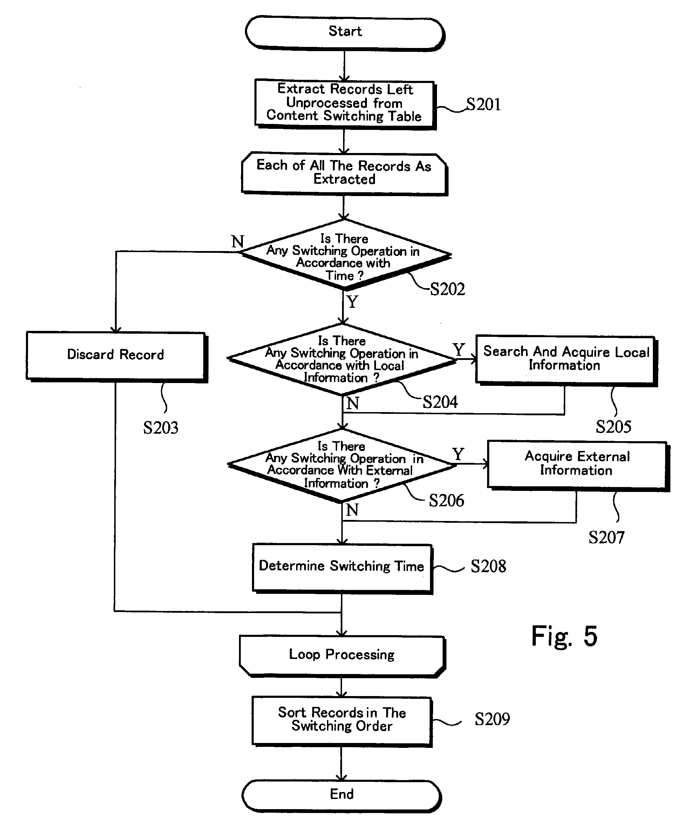

Next, content updating management information is generated on the basis of the content switching table in step S102. This content updating management information comprises a content updating schedule provided for each of the content presentation devices, and more specifically speaking it is generated by the procedure as shown in Fig. 5. The generation of this content updating management information will be described later.

Next, the time of the timer is acquired in step S103 to compare the content updating management information with the management time measured by the timer in step S104 and determine whether or not there is content to be replaced at the present time in step S105. Specifically, the presentation times of the content switching table are read and compared with the timer management time in order to determine whether or not there is content whose presentation time is expired. In step S105, if there is no content to be replaced ("N" in step S105), the process in the above steps S103 to S105 is repeated.

On the other hand, in step S105, if there is content to be replaced ("Y" in step S105), then the way of switching content data is read, and it is determined whether or not there is content to be delivered (updated) in step S106. Namely, it is determined whether content is to be delivered anew from the content data base 23 or the current content is to be simply replaced by content already stored in the content presentation device. In the case where the current content is replaced by content already stored in the content presentation device ("N" in step S106), the content ID for specifying the content for replacement is generated as index information in step S109. On the other hand, in step S106, if content is to be delivered anew ("Y" in step S106), the corresponding content is acquired from the content data base 23 in step S107.

Then, transmission data (the switching control signal) is generated in step S108 by the data generation unit 16 on the basis of the index information as generated in step S109 or the content data as acquired in step S107, and transmitted to the respective content presentation devices 41 to 43 through the data transmitter receiver unit 17 in step S110. When receiving the switching control signal, the respective content presentation devices 41 to 43 switch the content presented on the displays 4a on the basis of the switching control signal.

Then, the process of generating the content updating management information in step S102 as described above will be described in detail. Fig. 5 is a flow chart which shows the sub-routine of step S102.

First, when the process of generating the content updating management information is started, the content switching table is read in order to extract records left unprocessed in step S201, and repeat processing of the records as extracted by the loop process in steps S202 to S208 as described in the following description.

More specifically speaking, in step S202, it is determined whether or not a switching operation in accordance with time is to be performed on the basis of the presentation times of the record as read. For example, in the case where "all" is indicated as shown in the table 1, there is no switching operation in accordance with time and thereby the updating management is not necessary. Accordingly, in this case, the record is discarded in step S203, and the process proceeds to the process of the next record.

On the other hand, in step S202, if it is determined that there is a switching operation in accordance with time ("Y" in step S202), then it is determined whether or not there is a switching operation in accordance with local information in step S204. In other words, in the case where the associated local information of the content switching table is referred to and it is determined that an association with local information is written in the associated local information, the local information database 21 is searched to acquire the local information in step S205. For example, in the case where "railroad time table" is written in the associated local information, the time table is read from the local information database 21.

Next, it is determined whether or not there is a switching operation in accordance with external information in step S206. In other words, in the case where the associated external information of the content switching table is referred to and it is determined that an association with external information is written in the associated external information, the external information is acquired from the external information services 7 through the external information acquisition unit 14 in step S207. For example, in the case where "live traffic conditions", "weather forecast" or the like are written in the associated external information of the content switching table, the live traffic conditions, the weather forecast or the like are acquired from the external information services 7.

Then, the switching conditions are referred to on the basis of the local information and the external information, and the switching time is determined in accordance with the record as matched with the switching conditions in step S208. For example, in the case where the switching condition is "three minutes before arrival", the switching time is set to be the arrival time of a train minus three minutes. Also, in the case where the switching condition is "in the rain" and the weather forecast acquired in step S207 is rain, there is a match with the switching condition so that the switching time is determined on the basis of the presentation time in the content switching table.

Then, the process in the above steps S202 to S208 is performed with all the records, and after determining the switching times of the respective items of content the records are sorted in the switching order on the basis of the switching times in step S209. The collection of records as sorted are stored in the content updating management unit 15 as the content updating management information.

In accordance with the content presentation system of the present embodiment as described above, the content data to be presented by the content presentation devices 41 to 43 installed in a train, a station yard, roadside locations and so forth can be centrally managed by the management server 1 in accordance with the management information. In addition, the respective content presentation devices 41 to 43 are given unique content presentation device IPs, and the content data can be controlled for the respective content presentation devices with reference to the content presentation device IPs in order to present content in accordance with the respective areas and hours.

### [Industrial Applicability]

As has been discussed above, in accordance with the content presentation device, the management server, the content presentation system, and the content presentation method of the present invention, it is possible to provide information reflecting the population distribution which is changing in the respective areas on a real time base, by separately controlling and centrally managing the content presentation devices installed in a train, locations along a railway line, a station yard, roadside locations and so forth with reference to the identifiers of the content presentation devices.

## Claims

1. A content presentation device that presents content data containing image, sound, text or other information, said content presentation device comprising:
a content accumulating unit that accumulates the content data;
an identifier storing unit that stores a content presentation device identifier which is uniquely given to said content presentation devices;
an output unit that outputs said content data;
a communication unit that receives a switching control signal which instructs to switch the content data output from said output unit; and
an output switching unit that switches the content data output from said output unit on the basis of said switching control signal.

2. The content presentation device as claimed in claim 1 wherein said communication unit has a capability of receiving said content data, and wherein
said content accumulating unit has a capability of accumulating the content data as received by said communication unit.

3. The content presentation device as claimed in claim 1 further comprising a notification unit that notifies the content presentation device identifier stored in said identifier storing unit.

4. The content presentation device as claimed in claim 1 wherein
said communication unit is provided with a network formation capability of forming a local communication network with a base station or other content presentation devices located in a predetermined area, and wherein
the delivery of said content data or the reception of said switching control signal is performed through said communication network.

5. The content presentation device as claimed in claim 4 wherein the content presentation device is provided with a capability of detecting another communication terminal apparatus located in said communication network, and notifying the presentation device identifier of its own device to said another communication terminal apparatus.

6. The content presentation device as claimed in claim 5 wherein said communication unit is provided with a capability of acquiring through said communication network a terminal identifier which is used to specify another communication terminal apparatus located in said communication network.

7. A management server that manages content presentation devices that present content data containing image, sound, text or other information, said management server comprising:
a management information database that accumulates management information by which presentation device identifiers which identify said content presentation devices, content identifiers which identify content to be output respectively by the content presentation devices, and presentation time information relating to the times in which the respective items of said content are presented;
a timer unit that periodically measures an elapsed time;
a communication unit that transmits a switching control signal designating the content, which is to be output, to a content presentation device determined on the basis of said management information and the measurement time of said timer;

8. The management server as claimed in claim 7 wherein said management information contains switching way information as to whether content data to be replaced is replaced by content data delivered anew or by content already stored in the content presentation device, and wherein
said switching control signal includes the content identifier of the content data for replacement in accordance with said switching way information.

9. The management server as claimed in claim 7 wherein said management information contains local information relating to the population distribution which is changing with time, and said switching control signal is generated and transmitted in accordance with said local information.

10. The management server as claimed in claim 7 further comprising an external information acquisition unit that acquires information from external information service providers such as live traffic information and/or weather information, wherein
said management information contains external information to be associated and a switching condition applicable to said external information, and said switching control signal is generated and transmitted in accordance with said external information when said switching condition is satisfied.

11. The management server as claimed in claim 10 wherein the content data is delivered to the corresponding content presentation device on the basis of said management information.

12. The content presentation device as claimed in claim 11 wherein said management information contains content delivery information which associates the content identifier of the content to be delivered, the presentation device identifier of the destination of delivery, and the delivery times with each other.

13. A content presentation system that presents content data containing image, sound, text or other information on a content presentation device, said content presentation system comprising:
a content accumulating unit that accumulates the content data;
an identifier storing unit that stores a content presentation device identifier which is uniquely given to said content presentation devices;
an output unit that outputs said content data;
a communication unit that receives a switching control signal which instructs to switch the content data output from said output unit;
a management information database that accumulates management information by which said presentation device identifiers, content identifiers which identify content to be output respectively by the content presentation devices, and presentation time information relating to the times in which the respective items of said content are presented;
a timer unit that periodically measures an elapsed time; and
an output switching unit that switches the content data output from said output unit on the basis of said management information and the measurement time of said timer.

14. A content presentation method of presenting content data containing image, sound, text or other information on a content presentation device, said content presentation method comprising:
a step of accumulating management information by which presentation device identifiers which identify said content presentation devices, content identifiers which identify content to be output respectively by the content presentation devices, and presentation time information relating to the times in which the respective items of said content are presented;
a step of periodically measuring an elapsed time; and
a step of switching the content data that is presented by the presentation device specified by said content presentation device identifier on the basis of said management information and the elapsed time as measured.
